# FASCICULE DE BREVET EUROPEEN

(11) **EP 2 047 698 B1**
(45) Date de publication et mention de la délivrance du brevet: **06.07.2011**
(21) Numéro de dépôt: 07802393.4
(22) Date de dépôt: 24.07.2007
(51) Int. Cl.: H04W 88/02

(54) **PERSONNALISATION D ' UN TERMINAL DE RADIOCOMMUNICATION**
INDIVIDUELLE ANPASSUNG EINES FUNKKOMMUNIKATIONSENDGERÄTS
CUSTOMIZATION OF A RADIO COMMUNICATION TERMINAL

(30) Priorité: 01.08.2006 FR 0607044
(43) Date de publication de la demande: 15.04.2009
(73) Titulaire: Sierra Wireless, 92442 Issy-les-Moulineaux Cedex (FR)
(72) Inventeur: MONTES, Jacques, 94170 Le Perreux Sur Marne (FR); BEAUJARD, Olivier, 75017 Paris (FR)
(74) Mandataire: Guéné, Patrick
(86) Numéro de dépôt international: PCT/EP2007/057602
(87) Numéro de publication internationale: WO 2008/015126

(56) Documents cités:
- WO-A-00/41409
- US-A1- 2002 154 632

## Description

### 1. Domaine de l'invention

Le domaine de l'invention est celui des radiocommunications et plus particulièrement des terminaux de radiocommunication, tels que les radiotéléphones, les PDA (« Personal Digital Assistant » en anglais), les dispositifs de radiocommunication, destinés à être embarqués par exemple dans des machines ou des véhicules.

Plus précisément, l'invention concerne une technique de « gestion d'identité » permettant de personnaliser de tels dispositifs, lors de leur première utilisation et de façon définitive ou pour une durée prédéterminée liée à un abonnement. En effet, de plus en plus d'opérateurs de téléphonie mobile proposent aux usagers des offres d'abonnement de durée variable (1 an, 2ans,...).

L'invention trouve notamment des applications dans le domaine du M2M (pour « machine to machine » en anglais), où les machines comprennent des terminaux de radiocommunication afin de communiquer entre elles et/ou avec un ou plusieurs équipements (typiquement un serveur).

Ainsi, l'invention s'applique notamment, mais non exclusivement, aux systèmes de relevé de données à distance, par exemple sur des compteurs d'eau, de gaz ou d'électricité, et plus généralement aux systèmes de télémétrie ou de suivi de commandes, dans lesquels chaque équipement de mesure (compteur d'eau par exemple) ou de distribution (distributeur de boisson par exemple) est équipé d'un terminal de radiocommunication pour communiquer avec un ou plusieurs serveurs de gestion.

### 2. Art antérieur

Par souci de simplification de la description, on se limitera, dans toute la suite de ce document, à décrire le cas particulier où le dispositif de radiocommunication est un terminal de radiocommunication GSM comprenant une carte SIM (pour « Subscriber Identity Module » en anglais, « module d'identité d'abonné » en français). L'Homme du Métier étendra sans difficulté cet enseignement à tout autre type de terminal de radiocommunication.

Classiquement, un terminal de radiocommunication GSM ne peut communiquer avec le réseau GSM sans carte SIM personnalisée (c'est-à-dire sans une carte SIM avec des données de personnalisation activées). En effet, une carte SIM est un module comprenant toutes les données concernant l'abonné, à savoir un numéro d'identité IMSI (pour « International Mobile Subscriber Identity » en anglais), une clé d'authentification Ki, ainsi que des algorithmes associés d'authentification de l'abonné par le réseau GSM.

Lors de la personnalisation de terminaux de radiocommunication, on cherche notamment à concilier au moins certains des objectifs suivants :
- simplicité des manipulations d'activation de la personnalisation, l'utilisateur devant pouvoir effectuer ces opérations avec un nombre réduit d'opérations, et chacune de ces opérations devant être le plus facile possible ;
- sécurité des données de personnalisation ;
- simplicité et faible coût de la mise en oeuvre.

La technique actuelle consiste, pour un utilisateur, à choisir un opérateur d'un réseau public terrestre (ou « PLMN » pour « Public Land Mobile Network » en anglais), acheter une carte SIM personnalisée dans un des points de vente de l'opérateur choisi, puis insérer la carte SIM personnalisée dans un terminal de radiocommunication. De cette manière, le terminal de radiocommunication est personnalisé et peut accéder aux services du réseau (PLMN) de l'opérateur choisi. Un exemple se trouve dans le document WO 0041909.

A titre d'exemple, on discute ci-après les inconvénients de l'art antérieur à travers le cas particulier où le terminal de radiocommunication GSM est embarqué dans un appareil de relevé de données à distance, par exemple un compteur d'eau.

Les inventeurs ont constaté que la technique actuelle précitée présente un certain nombre d'inconvénients dans certaines situations, notamment dans le contexte d'une application en mode point à point du type M2M.

L'efficacité de cette technique connue est limitée par le fait que le terminal de radiocommunication, après personnalisation, n'utilise pas toujours les meilleures ressources radio (aussi appelées par la suite porteuses ou encore fréquences-balises) qui sont disponibles à l'endroit où il se trouve.

En effet, l'utilisateur choisit un opérateur sans connaître exactement la qualité du réseau (PLMN) de cet opérateur à l'endroit où le terminal sera utilisé par la suite.

Dans le pire des cas, le terminal de radiocommunication, qui a déjà été personnalisé par un utilisateur pour travailler avec un opérateur donné, peut même être placé dans une cellule géographique non couverte par cet opérateur donné.

De plus, la plupart des acteurs du marché du M2M souhaitent dorénavant que la transmission et réception des données machines soient plus rapides et plus fiables. La sélection et l'utilisation de la meilleure porteuse disponible deviennent ainsi critiques.

Un autre inconvénient de cette technique connue réside dans le fait qu'elle ne permet pas à une société qui souhaiterait implanter des millions de terminaux (par exemple embarqués dans des compteurs d'eau) d'optimiser le choix de l'opérateur (c'est-à-dire du réseau) pour chaque terminal.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir une technique de personnalisation d'un terminal de radiocommunication qui soit simple et efficace à mettre en oeuvre, notamment en terme de ressources radio utilisées.

L'invention, dans au moins un de ses modes de réalisation, a encore pour objectif de fournir une telle technique qui permette à un utilisateur d'activer la personnalisation d'un terminal de radiocommunication, lors de sa première utilisation et de façon définitive ou pour une durée prédéterminée liée à un abonnement.

Un autre objectif de l'invention, dans au moins un de ses modes de réalisation, est de fournir une telle technique, qui soit ergonomique et supprime, ou tout le moins limite, les opérations de saisie manuelle devant être effectuées par l'utilisateur.

Un autre objectif de l'invention, dans au moins un de ses modes de réalisation, est de proposer une telle technique qui soit notamment bien adaptée à la personnalisation définitive ou pour une durée prédéterminée liée à un abonnement d'un grand nombre de terminaux de radiocommunication mis en oeuvre dans des applications en mode point à point du type M2M.

L'invention, dans au moins un de ses modes de réalisation, a également pour objectif de fournir une telle technique qui soit peu coûteuse et compatible avec tous les terminaux de communication existants.

### 4. Exposé de l'invention

Ces objectifs, ainsi que d'autres qui apparaîtront par la suite, sont atteints à l'aide d'un procédé de personnalisation définitive ou d'une durée prédéterminée liée à un abonnement d'un terminal de radiocommunication possédant un mode de fonctionnement nécessitant l'association audit terminal d'un jeu de données de personnalisation spécifique à un réseau de radiocommunication, afin de permettre une liaison dudit terminal avec ledit réseau de radiocommunication.

Selon l'invention, le procédé comprend les étapes suivantes, effectuées une seule fois lors d'une première utilisation dudit terminal :
- placement dans un environnement réel d'utilisation dudit terminal, aucun jeu de données de personnalisation activé et définitif n'étant associé audit terminal ;
- obtention d'informations de porteuses, relatives à des porteuses reçues par ledit terminal, chaque porteuse étant associée à une cellule géographique distincte d'un réseau de radiocommunication ;
- sélection d'un jeu de données de personnalisation pour ledit terminal, parmi une pluralité de jeux de données de personnalisation, en fonction d'au moins un critère de sélection appliqué aux informations de porteuses obtenues, ladite pluralité de jeux de données de personnalisation comprenant au moins un premier jeu de données de personnalisation spécifique à un premier réseau de radiocommunication et au moins un second jeu de données de personnalisation spécifique à un second réseau de radiocommunication.

Ainsi, l'invention repose sur une approche tout à fait nouvelle et inventive de la personnalisation d'un terminal de radiocommunication en attente d'attribution d'une identité. En effet, l'invention s'appuie sur l'obtention d'informations de porteuses, qui ne nécessite donc aucune action manuelle particulière de l'utilisateur.

L'invention consiste donc à choisir le réseau in situ, au lieu d'un choix de réseau (et donc d'opérateur) a priori.

En outre, l'invention propose d'automatiser tout ou partie de la personnalisation, en utilisant les informations de porteuses qui sont obtenues par le terminal de radiocommunication.

L'invention prévoit avantageusement de personnaliser une fois pour toute le terminal de radiocommunication avec un jeu de données de personnalisation, lui permettant d'utiliser la meilleure porteuse qui est disponible à l'endroit où il se trouve.

La présente invention couvre un premier cas dans lequel la sélection d'un jeu de données de personnalisation se fait entre des jeux de données de personnalisation spécifiques à des réseaux (de types distincts, par exemple GSM et UMTS) d'un même opérateur.

L'invention couvre également un second cas dans lequel la sélection d'un jeu de données de personnalisation se fait entre des jeux de données de personnalisation spécifiques à des réseaux d'opérateurs distincts.

Par environnement réel d'utilisation, on entend tout environnement d'utilisation hors usine.

Par informations de porteuses, on entend tout type d'information véhiculé par les porteuses (par exemple sur le canal SCH (pour « Synchronization Channel » en anglais) (canal logique supporté par le canal physique (sur le slot n°0) de la porteuse)), par exemple des informations de puissance/qualité, des informations de réseaux (PLMN), etc.

Selon un aspect avantageux de l'invention, ledit au moins un critère de sélection appartient au groupe comprenant :
- des critères de sélection basés sur une qualité des porteuses reçues par le terminal ; et
- des critères de sélection basés sur un ordre de préférence prédéterminé de réseaux de radiocommunication.

Ainsi, il est possible de personnaliser un terminal de radiocommunication en fonction de mesures de puissance obtenues pour des cellules géographiques voisines de celle dans laquelle se trouve le terminal de radiocommunication.

En outre, on prévoit avantageusement de personnaliser un terminal de radiocommunication en fonction des préférences de l'utilisateur, en termes de type de réseau (GSM, UMTS, GPRS, etc.) et d'opérateur (par exemple, en France, SFR, Bouyges, etc.) à utiliser.

Dans un premier mode de réalisation particulier de l'invention, lesdites étapes d'obtention d'informations de porteuses et de sélection d'un jeu de données de personnalisation sont effectuées par ledit terminal.

Dans ce premier mode de réalisation particulier, la décision de personnalisation est prise par le terminal de radiocommunication lui-même. La personnalisation du terminal de radiocommunication est donc effectuée sans l'intervention d'un serveur. Ainsi, il n'est pas nécessaire d'activer un jeu de données de personnalisation (IMSI, Ki) lors de la première utilisation du terminal de radiocommunication, du fait que ce dernier n'a pas besoin de communiquer avec le serveur lors de la personnalisation.

Dans un mode de réalisation préférentiel de l'invention, le procédé comprend une étape de libération du ou des jeu(x) de données de personnalisation autre(s) que celui sélectionné.

L'entité qui met en oeuvre la présente invention (par exemple un « MVNO » pour « Mobile Virtual Network Operator » en anglais, « Opérateur de téléphonie mobile virtuel » en français) pour personnaliser un grand nombre de terminaux peut limiter le nombre total de jeux de données de personnalisation nécessaires. En effet, plusieurs jeux de données de personnalisation sont bloqués dans chaque terminal n'ayant pas encore été personnalisé. Mais, dès que ce terminal a été personnalisé, les jeux de données de personnalisation non retenus sont libérés, en d'autres termes ils deviennent à nouveau disponibles en tant que jeux de données de personnalisation possibles pour un autre terminal.

Dans une variante du mode de réalisation préférentiel de l'invention, ladite étape de libération comprend les étapes suivantes :
- le terminal envoie à un premier serveur un message indiquant le jeu de données de personnalisation sélectionné pour ledit terminal ; et
- ledit premier serveur libère le ou les jeu(x) de données de personnalisation autre(s) que celui sélectionné.

De façon avantageuse, le procédé comprend une étape de confirmation ou modification de la sélection effectuée par le terminal, comprenant les étapes suivantes :
- le terminal envoie à un second serveur, confondu ou non avec le premier serveur, un message indiquant le jeu de données de personnalisation sélectionné pour ledit terminal ; et
- ledit second serveur envoie au terminal une réponse lui confirmant la sélection effectuée par le terminal, ou bien lui demandant de remplacer le jeu de données de personnalisation sélectionné pour ledit terminal par un autre jeu de données de personnalisation.

Dans un mode de réalisation préférentiel de l'invention, l'étape de confirmation ou modification de la sélection effectuée par le terminal, comprend en outre les étapes suivantes :
- le terminal envoie audit second serveur lesdites informations de porteuses ;
- le second serveur sélectionne ledit autre jeu de données de personnalisation en fonction desdites informations de porteuses ; et
- le second serveur envoie ledit autre jeu de données de personnalisation au terminal.

Dans un second mode de réalisation particulier de l'invention, le procédé comprend une étape d'envoi par le terminal à un troisième serveur desdites informations de porteuses. Selon l'invention, le troisième serveur effectue :
- ladite étape d'obtention d'informations de porteuses, en recevant lesdites informations de porteuses ;
- ladite étape de sélection d'un jeu de données de personnalisation ; et
- une étape d'envoi au terminal du jeu de données de personnalisation sélectionné pour ledit terminal.

Dans ce second mode de réalisation particulier, la décision de personnalisation est prise au niveau du serveur. Lors de la première mise en route du terminal de radiocommunication, le terminal transmet au serveur des informations de porteuses, via une communication de démarrage. Pour ce faire, le terminal de radiocommunication utilise au moins un jeu de données de personnalisation activé et non définitif, préalablement stocké dans le terminal. De cette manière, si un premier jeu de données ne permet pas d'établir la communication de démarrage, alors le terminal peut essayer d'ouvrir cette communication avec des deuxième, troisième,... jeux de données. Le serveur effectue la sélection d'un jeu de données de personnalisation activé et définitif pour le terminal de radiocommunication, en fonction des informations de porteuses. Ainsi, toute l'intelligence et la logique de sélection sont déportées au niveau du serveur, ce qui rend l'invention exploitable pour n'importe quel type de terminal de radiocommunication, ce dernier ne nécessitant donc aucune adaptation complexe et coûteuse pour être compatible avec le procédé selon l'invention, ce qui est particulièrement intéressant.

Préférentiellement, ledit terminal comprend une carte SIM. Selon l'invention, lesdites données de personnalisation sont stockées dans ladite carte SIM et/ou dans ledit terminal.

De façon avantageuse, lesdites données de personnalisation comprennent au moins un desdits éléments suivants :
- un numéro d'identité IMSI ;
- une clé d'authentification Ki ; et
- un algorithme d'authentification.

De façon préférentielle, ladite étape d'obtention d'informations de porteuses consiste à obtenir des mesures de porteuses, pour chacun d'au moins deux réseaux de radiocommunication.

L'invention concerne également un terminal de radiocommunication possédant un mode de fonctionnement nécessitant l'association audit terminal d'un jeu de données de personnalisation spécifique à un réseau de radiocommunication, afin de permettre une liaison dudit terminal avec ledit réseau de radiocommunication. Selon l'invention, le terminal comprend :
- des moyens d'obtention d'informations de porteuses, relatives à des porteuses, chaque porteuse étant associée à une cellule géographique distincte d'un réseau de radiocommunication ;
- des moyens de sélection d'un jeu de données de personnalisation parmi une pluralité de jeux de données de personnalisation, en fonction d'au moins un critère de sélection appliqué aux informations de porteuses obtenues, ladite pluralité de jeux de données de personnalisation comprenant au moins un premier jeu de données de personnalisation spécifique à un premier réseau de radiocommunication et au moins un second jeu de données de personnalisation spécifique à un second réseau de radiocommunication.

L'invention concerne aussi un serveur de personnalisation définitive ou d'une durée prédéterminée liée à un abonnement d'un terminal de radiocommunication possédant un mode de fonctionnement nécessitant l'association audit terminal d'un jeu de données de personnalisation spécifique à un réseau de radiocommunication, afin de permettre une liaison dudit terminal avec ledit réseau de radiocommunication. Selon l'invention, le serveur comprend :
- des moyens d'obtention d'informations de porteuses, relatives à des porteuses, chaque porteuse étant associée à une cellule géographique distincte d'un réseau de radiocommunication ;
- des moyens de sélection d'un jeu de données de personnalisation parmi une pluralité de jeux de données de personnalisation, en fonction d'au moins un critère de sélection appliqué aux informations de porteuses obtenues, ladite pluralité de jeux de données de personnalisation comprenant au moins un premier jeu de données de personnalisation spécifique à un premier réseau de radiocommunication et au moins un second jeu de données de personnalisation spécifique à un second réseau de radiocommunication.

L'invention concerne encore une carte SIM d'un terminal de radiocommunication possédant un mode de fonctionnement nécessitant l'association audit terminal d'un jeu de données de personnalisation spécifique à un réseau de radiocommunication, afin de permettre une liaison dudit terminal avec ledit réseau de radiocommunication. Selon l'invention, la carte SIM comprend des moyens de stockage desdites données de personnalisation.

L'invention concerne en outre un produit programme d'ordinateur comprenant des instructions de code de programme pour l'exécution des étapes du procédé précité, lorsque ledit programme est exécuté sur un ordinateur.

L'invention concerne également un moyen de stockage, éventuellement totalement ou partiellement amovible, lisible par un ordinateur, stockant un jeu d'instructions exécutables par ledit ordinateur pour mettre en oeuvre le procédé précité.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 représente un organigramme illustrant un mode de réalisation particulier du procédé selon l'invention, dans le cas où la sélection du jeu de données de personnalisation est effectuée par un terminal de radiocommunication ;
- la figure 2 représente un organigramme illustrant un mode de réalisation particulier du procédé selon l'invention, dans le cas où la sélection du jeu de données de personnalisation est effectuée au niveau d'un serveur ;
- la figure 3 présente la structure simplifiée d'un mode de réalisation particulier d'un terminal de radiocommunication selon l'invention ; et
- la figure 4 présente la structure simplifiée d'un mode de réalisation particulier d'un serveur selon l'invention.

### 6. Description détaillée

L'invention vise donc à fournir une technique de personnalisation définitive ou d'une durée prédéterminée liée à un abonnement d'un terminal de radiocommunication en attente d'attribution d'une identité.

Comme déjà indiqué, cette personnalisation a pour objectif de permettre une liaison entre le terminal de radiocommunication et un réseau public terrestre d'un opérateur (PLMN).

La personnalisation selon l'invention est effectuée une seule fois lors d'une première utilisation du terminal de radiocommunication dans un environnement réel d'utilisation, c'est-à-dire dans un contexte d'utilisation hors usine.

Le principe général de l'invention repose sur une technique de sélection d'un jeu de données de personnalisation, permettant au terminal de radiocommunication d'utiliser le meilleur réseau (au sens de critères prédéterminés) disponible pour la cellule géographique dans laquelle le terminal est positionné lors de la mise en oeuvre de la personnalisation selon l'invention.

Par souci de simplification de la description, on se limitera, dans toute la suite de ce document, à décrire le cas particulier d'une personnalisation d'un terminal de radiocommunication GSM embarqué dans un compteur d'eau. Après personnalisation (c'est-à-dire après activation d'un jeu de données de personnalisation dans le terminal de radiocommunication), le compteur d'eau peut par exemple transmettre des données de consommation d'un ou plusieurs usagers vers un équipement de contrôle distant, via le réseau GSM. Dans ce mode de réalisation, le compteur d'eau est prévu pour être positionné de façon définitive à un endroit, par exemple au sous sol d'un immeuble. Bien entendu, l'invention s'applique à tout autre type de terminal de radiocommunication, notamment, mais non exclusivement, aux terminaux de radiocommunication mobiles (radiotéléphone, PDA, etc.).

Il est important de noter que, dans un premier mode de réalisation particulier, tous les jeux de données de personnalisation sont stockés (en clair ou sous une forme cryptée) dans le terminal. Dans une variante de réalisation, tous les jeux de données de personnalisation sont stockés dans une carte SIM. Dans une autre variante de réalisation, certains jeux sont stockés dans le terminal et d'autres dans la carte SIM.

Dans la suite de ce document, on suppose que l'utilisateur a déjà inséré dans le terminal de radiocommunication une carte SIM selon l'invention qui comprend une pluralité de jeux de données de personnalisation. Dans un mode de réalisation particulier, la carte SIM de l'invention comprend deux jeux de données de personnalisation, un premier jeu de données (noté IMSI 1, Ki 1) spécifique à un premier réseau public terrestre d'un premier opérateur (par exemple le réseau GSM de l'opérateur SFR) et un second jeu de données (noté IMSI 2, Ki 2) spécifique à un second réseau public terrestre d'un second opérateur (par exemple le réseau UMTS de l'opérateur Bouygues).

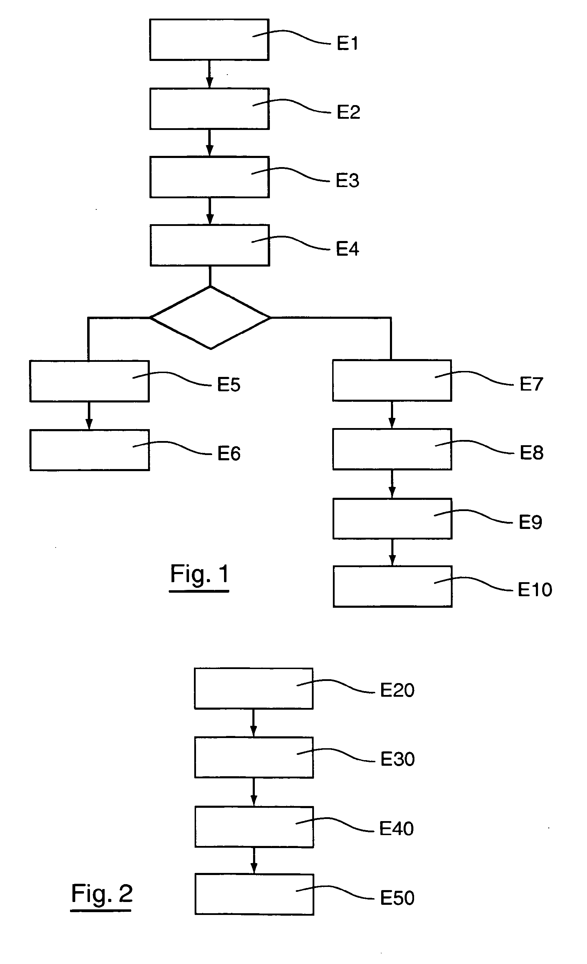

On présente maintenant, en relation avec la **figure 1**, un organigramme illustrant un mode de réalisation particulier du procédé selon l'invention, dans le cas où la sélection du jeu de données de personnalisation (IMSI, Ki) est effectuée par le terminal de radiocommunication.

De façon classique, le terminal de radiocommunication, qui est positionné dans une cellule géographique donnée, reçoit des porteuses de cette cellule donnée et des cellules géographiques avoisinantes.

Lors d'une première étape E1, le terminal de radiocommunication obtient des informations de puissance (aussi appelées par la suite informations de porteuses) relatives aux porteuses reçues, au moyen d'un balayage du réseau (ou « scan réseau »). Dans un mode de réalisation particulier, les informations de puissance sont obtenues par l'exécution par le terminal de radiocommunication de commandes AT. De telles commandes AT sont présentées en détail dans le document de normalisation 3GPP TS 07.07.

A titre d'exemple, la commande « AT+COPS= ? » permet d'obtenir une liste de réseaux (PLMN) visibles par le terminal de radiocommunication (on obtient ainsi une liste d'identifiants de PLMN).

Par ailleurs, on utilise une commande permettant d'obtenir une liste de cellules courante (dans laquelle se trouve le terminal) et voisines (jusqu'à 6 cellules) avec, pour chaque cellule, une mesure de niveau (on utilise par exemple la commande « AT+CCED= 0 », proposée par la société WAVECOM). On note que cette commande AT remonte uniquement les cellules voisines d'un même opérateur. Selon l'invention, le terminal de radiocommunication doit obtenir des mesures de puissance pour des cellules voisines d'opérateurs distincts. Pour ce faire, on conçoit une nouvelle commande par exemple en faisant évoluer la commande AT+CCED précitée, pour qu'elle remonte les mesures de la cellule la plus puissante sur chacun des opérateurs visibles, sans essayer à chaque fois de s'enregistrer dessus.

Lors d'une étape E2, le terminal de radiocommunication sélectionne un jeu de données de personnalisation, parmi les deux jeux de données de personnalisation de l'exemple précité, en fonction d'un critère de sélection appliqué aux informations de porteuses obtenues à l'étape E1.

Dans le présent mode de réalisation, le critère de sélection est un critère basé sur la qualité ou la puissance des porteuses reçues par le terminal. Ainsi, on peut choisir la porteuse la plus puissante pour le terminal.

Dans une variante de réalisation, le critère de sélection est un critère basé sur un ordre de préférence de réseaux de radiocommunication. L'utilisateur peut donc préciser, par exemple, qu'il souhaite travailler avec l'opérateur SFR plutôt qu'avec l'opérateur Bouygues.

Dans une autre variante de réalisation, le critère de sélection est une combinaison de deux critères, avec un premier critère basé sur la qualité ou la puissance des porteuses reçues par le terminal et un second critère basé sur un ordre de préférence de réseaux de radiocommunication. A titre d'exemple, on peut envisager le critère suivant : si la différence de niveau de puissance de réception entre un premier opérateur et un second opérateur est inférieure à 10dBm, alors on choisit le second opérateur, sinon on choisit le premier opérateur.

Il est important de noter qu'à l'issue de cette étape E2, on active le jeu de données de personnalisation sélectionné. Dans notre exemple, on sélectionne le premier jeu de données IMSI 1, Ki 1 (associé au réseau GSM de l'opérateur SFR). Le terminal de radiocommunication est donc personnalisé et peut ainsi communiquer avec l'équipement de contrôle distant, via le réseau GSM de l'opérateur SFR.

Lors d'une étape E3, le terminal de radiocommunication envoie à un serveur du réseau un message indiquant le jeu de données de personnalisation sélectionné à l'étape E2 (c'est-à-dire le premier jeu de données IMSI 1, Ki 1, dans l'exemple précité).

Lors d'une étape E4, le serveur du réseau confirme ou non la sélection effectuée par le terminal à l'étape E2. En cas de confirmation positive, on passe à une étape E5, sinon on passe à une étape E7.

Lors de l'étape E5, le serveur du réseau envoie au terminal de radiocommunication une réponse lui confirmant la sélection effectuée (étape E2).

Lors d'une étape finale E6, le serveur du réseau libère le ou les jeu(x) de données de personnalisation autre(s) que celui sélectionné (étape E2). Dans notre exemple, le serveur du réseau libère le second jeu de données IMSI 2 (associé au réseau UMTS de l'opérateur Bouygues).

Lors de l'étape E7, le terminal de radiocommunication envoie au serveur du réseau les informations de porteuses obtenues à l'étape E1.

Lors d'une étape E8, le serveur du réseau sélectionne un autre jeu de données de personnalisation (parmi les deux jeux de données de personnalisation précités), en fonction des informations de porteuses reçues.

Ensuite, lors d'une étape E9, le serveur du réseau envoie l'autre jeu de données de personnalisation sélectionné (étape E8) (c'est-à-dire le second jeu de données IMSI 2, Ki 2, dans l'exemple précité) au terminal de radiocommunication.

Enfin, lors d'une étape E10, le terminal de radiocommunication active l'autre jeu de données de personnalisation sélectionné (étape E8). Le terminal de radiocommunication est donc personnalisé et peut ainsi communiquer avec le réseau UMTS de l'opérateur Bouygues.

On présente désormais, en relation avec la **figure 2**, un organigramme illustrant un mode de réalisation particulier du procédé selon l'invention, dans le cas où la sélection du jeu de données de personnalisation (IMSI, Ki) est effectuée au niveau du serveur du réseau.

Comme déjà indiqué, le terminal de radiocommunication, qui est positionné dans une cellule géographique donnée, reçoit des porteuses de différentes cellules géographiques, pour les opérateurs visibles à cet endroit.

Lors d'une première étape E20, le terminal de radiocommunication envoie au serveur du réseau des informations de puissance (aussi appelées informations de porteuses) relatives aux porteuses reçues par le terminal, au moyen d'un balayage du réseau.

Lors d'une étape E30, le serveur du réseau sélectionne un jeu de données de personnalisation, parmi les deux jeux de données de personnalisation de l'exemple précité, en fonction d'un critère de sélection appliqué aux informations de porteuses reçues à l'étape E20. Dans notre exemple, le serveur du réseau sélectionne le premier jeu de données IMSI 1, Ki 1 (associé au réseau GSM de l'opérateur SFR).

Ensuite, lors d'une étape E40, le serveur du réseau envoie le jeu de données de personnalisation sélectionné à l'étape E30 (c'est-à-dire le premier jeu de données IMSI 1, Ki 1) au terminal de radiocommunication.

Enfin, lors d'une étape E50, le terminal de radiocommunication active le premier jeu de données IMSI 1, Ki 1. Le terminal de radiocommunication est donc personnalisé et peut ainsi communiquer avec le réseau GSM de l'opérateur SFR.

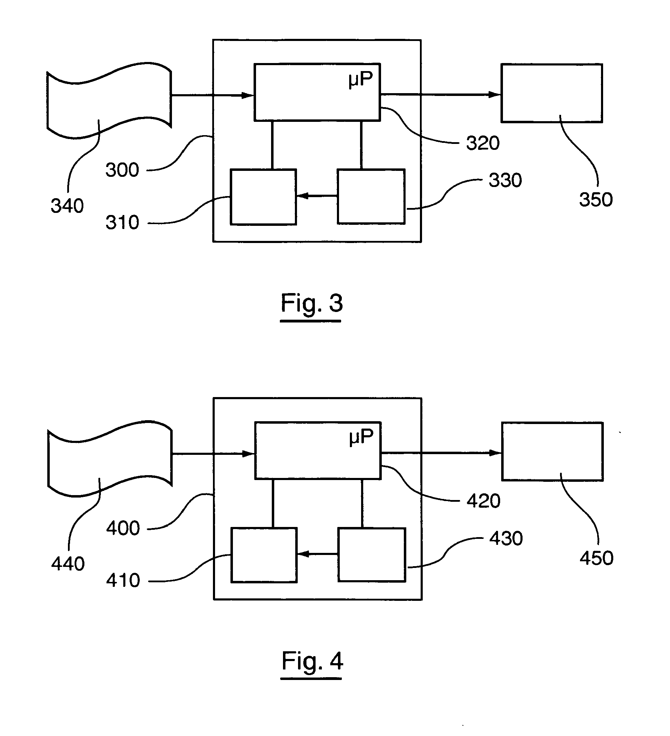

La **figure 3** présente de façon schématique la structure d'un terminal de radiocommunication 300 selon l'invention, qui comprend une mémoire 310, et une unité de traitement 320 équipée d'un microprocesseur µP, qui est piloté par un programme d'ordinateur (ou application) 330 mettant en oeuvre certaines étapes du procédé selon l'invention décrites aux figures 1 et 2. L'unité de traitement 320 reçoit en entrée des informations de porteuses 340. Le microprocesseur µP traite ces informations, selon les instructions du programme 330, pour obtenir un jeu de données de personnalisation 350 (sélectionné parmi une pluralité de jeux de données de personnalisation).

La **figure 4** présente de façon schématique la structure d'un serveur 400 selon l'invention, qui comprend une mémoire 410, et une unité de traitement 420 équipée d'un microprocesseur µP, qui est piloté par un programme d'ordinateur (ou application) 430 mettant en oeuvre certaines étapes du procédé selon l'invention décrites aux figures 1 et 2. L'unité de traitement 420 reçoit en entrée des informations de porteuses 440 (transmis par le terminal de radiocommunication 300). Le microprocesseur µP traite ces informations, selon les instructions du programme 430, pour obtenir un jeu de données de personnalisation 450 (sélectionné parmi une pluralité de jeux de données de personnalisation, puis envoyé au terminal de radiocommunication 300).

## Revendications

1. Procédé de personnalisation définitive ou d'une durée prédéterminée liée à un abonnement d'un terminal de radiocommunication possédant un mode de fonctionnement nécessitant l'association audit terminal d'un jeu de données de personnalisation spécifique à un réseau de radiocommunication, afin de permettre une liaison dudit terminal avec ledit réseau de radiocommunication,
**caractérisé en ce qu'**il comprend les étapes suivantes, effectuées une seule fois lors d'une première utilisation dudit terminal :
- placement dans un environnement réel d'utilisation dudit terminal, aucun jeu de données de personnalisation activé et définitif n'étant associé audit terminal ;
- obtention d'informations de porteuses, relatives à des porteuses reçues par ledit terminal, chaque porteuse étant associée à une cellule géographique distincte d'un réseau de radiocommunication ;
- sélection d'un jeu de données de personnalisation pour ledit terminal, parmi une pluralité de jeux de données de personnalisation, en fonction d'au moins un critère de sélection appliqué aux informations de porteuses obtenues, ladite pluralité de jeux de données de personnalisation comprenant au moins un premier jeu de données de personnalisation spécifique à un premier réseau de radiocommunication et au moins un second jeu de données de personnalisation spécifique à un second réseau de radiocommunication.

2. Procédé selon la revendication 1, **caractérisé en ce que** ledit au moins un critère de sélection appartient au groupe comprenant :
- des critères de sélection basés sur une qualité des porteuses reçues par le terminal ; et
- des critères de sélection basés sur un ordre de préférence prédéterminé de réseaux de radiocommunication.

3. Procédé selon l'une quelconque des revendications 1 et 2, **caractérisé en ce que** lesdites étapes d'obtention d'informations de porteuses et de sélection d'un jeu de données de personnalisation sont effectuées par ledit terminal.

4. Procédé selon la revendication 3, **caractérisé en ce qu'**il comprend une étape de libération du ou des jeu(x) de données de personnalisation autre(s) que celui sélectionné.

5. Procédé selon la revendication 4, **caractérisé en ce que** ladite étape de libération comprend les étapes suivantes :
- le terminal envoie à un premier serveur un message indiquant le jeu de données de personnalisation sélectionné pour ledit terminal ; et
- ledit premier serveur libère le ou les jeu(x) de données de personnalisation autre(s) que celui sélectionné.

6. Procédé selon l'une quelconque des revendications 3 à 5, **caractérisé en ce qu'**il comprend une étape de confirmation ou modification de la sélection effectuée par le terminal, comprenant les étapes suivantes :
- le terminal envoie à un second serveur, confondu ou non avec le premier serveur, un message indiquant le jeu de données de personnalisation sélectionné pour ledit terminal ; et
- ledit second serveur envoie au terminal une réponse lui confirmant la sélection effectuée par le terminal, ou bien lui demandant de remplacer le jeu de données de personnalisation sélectionné pour ledit terminal par un autre jeu de données de personnalisation.

7. Procédé selon la revendication 6, **caractérisé en ce que** l'étape de confirmation ou modification de la sélection effectuée par le terminal, comprend en outre les étapes suivantes :
- le terminal envoie audit second serveur lesdites informations de porteuses ;
- le second serveur sélectionne ledit autre jeu de données de personnalisation en fonction desdites informations de porteuses ; et
- le second serveur envoie ledit autre jeu de données de personnalisation au terminal.

8. Procédé selon l'une quelconque des revendications 1 et 2, **caractérisé en ce qu'**il comprend une étape d'envoi par le terminal à un troisième serveur desdites informations de porteuses, et **en ce que** le troisième serveur effectue :
- ladite étape d'obtention d'informations de porteuses, en recevant lesdites informations de porteuses ;
- ladite étape de sélection d'un jeu de données de personnalisation ; et
- une étape d'envoi au terminal du jeu de données de personnalisation sélectionné pour ledit terminal.

9. Procédé selon l'une quelconque des revendications 1 à 8, **caractérisé en ce que** ledit terminal comprend une carte SIM, et **en ce que** lesdites données de personnalisation sont stockées dans ladite carte SIM et/ou dans ledit terminal.

10. Procédé selon l'une quelconque des revendications 1 à 9, **caractérisé en ce que** lesdites données de personnalisation comprennent au moins un desdits éléments suivants :
- un numéro d'identité IMSI ;
- une clé d'authentification Ki ; et
- un algorithme d'authentification.

11. Procédé selon l'une quelconque des revendications 1 à 10, **caractérisé en ce que** ladite étape d'obtention d'informations de porteuses consiste à obtenir des mesures de porteuses, pour chacun d'au moins deux réseaux de radiocommunication.

12. Terminal de radiocommunication possédant un mode de fonctionnement nécessitant l'association audit terminal d'un jeu de données de personnalisation spécifique à un réseau de radiocommunication, afin de permettre une liaison dudit terminal avec ledit réseau de radiocommunication, **caractérisé en ce qu'**il comprend :
- des moyens d'obtention d'informations de porteuses, relatives à des porteuses, chaque porteuse étant associée à une cellule géographique distincte d'un réseau de radiocommunication ;
- des moyens de sélection d'un jeu de données de personnalisation parmi une pluralité de jeux de données de personnalisation, en fonction d'au moins un critère de sélection appliqué aux informations de porteuses obtenues, ladite pluralité de jeux de données de personnalisation comprenant au moins un premier jeu de données de personnalisation spécifique à un premier réseau de radiocommunication et au moins un second jeu de données de personnalisation spécifique à un second réseau de radiocommunication.

13. Serveur de personnalisation définitive ou d'une durée prédéterminée liée à un abonnement d'un terminal de radiocommunication possédant un mode de fonctionnement nécessitant l'association audit terminal d'un jeu de données de personnalisation spécifique à un réseau de radiocommunication, afin de permettre une liaison dudit terminal avec ledit réseau de radiocommunication, **caractérisé en ce qu'**il comprend :
- des moyens d'obtention d'informations de porteuses, relatives à des porteuses, chaque porteuse étant associée à une cellule géographique distincte d'un réseau de radiocommunication ;
- des moyens de sélection d'un jeu de données de personnalisation parmi une pluralité de jeux de données de personnalisation, en fonction d'au moins un critère de sélection appliqué aux informations de porteuses obtenues, ladite pluralité de jeux de données de personnalisation comprenant au moins un premier jeu de données de personnalisation spécifique à un premier réseau de radiocommunication et au moins un second jeu de données de personnalisation spécifique à un second réseau de radiocommunication.

14. Carte SIM d'un terminal de radiocommunication possédant un mode de fonctionnement nécessitant l'association audit terminal d'un jeu de données de personnalisation spécifique à un réseau de radiocommunication, afin de permettre une liaison dudit terminal avec ledit réseau de radiocommunication, **caractérisé en ce qu'**elle comprend des moyens de stockage desdites données de personnalisation.

15. Produit programme d'ordinateur téléchargeable depuis un réseau de communication et/ou enregistré sur un support lisible par ordinateur et/ou exécutable par un processeur **caractérisé en ce qu'**il comprend des instructions de code de programme pour l'exécution des étapes du procédé de personnalisation d'au moins une des revendications 1 à 11, lorsque ledit programme est exécuté sur un ordinateur.

16. Moyen de stockage, éventuellement totalement ou partiellement amovible, lisible par un ordinateur, stockant un jeu d'instructions exécutables par ledit ordinateur pour mettre en oeuvre le procédé de personnalisation selon l'une quelconque des revendications 1 à 11.

## Claims

1. Method of definitive customisation or customisation for a predetermined duration related to a subscription of a radio communication terminal comprising an operating mode requiring the association to said terminal of a customisation data set specific to a radio communication network, in order to allow for a link of said terminal with said radio communication network,
**characterised in that** it comprises the following steps, carried out a single time during a first use of said terminal:
- placing in a real environment of use of said terminal, with no activated and definitive customisation data set being associated to said terminal;
- obtaining carrier information, pertaining to carriers received by said terminal, each carrier being associated to a distinct geographical cell of a radio communication network;
- selecting a customisation data set for said terminal, from among a plurality of customisation data sets, according to at least one selection criterion applied to the carrier information obtained, said plurality of customisation data sets comprising at least one first customisation data set specific to a first radio communication network and at least one second customisation data set specific to a second radio communication network.

2. Method according to claim 1, **characterised in that** said at least one selection criterion belongs to the group comprising:
- selection criteria based on a quality of carriers received by the terminal; and
- selection criteria based on a predetermined order of preference of radio communication networks.

3. Method according to any of claims 1 and 2, **characterised in that** said steps of obtaining carrier information and of selecting a customisation data set are carried out by said terminal.

4. Method according to claim 3, **characterised in that** it comprises a step of releasing the customisation data set(s) other than the one selected.

5. Method according to claim 4, **characterised in that** said step of releasing comprises the following steps:
- the terminal sends to a first server a message indicating the customisation data set selected for said terminal; and
- said first server releases the customisation data set(s) other than the one selected.

6. Method according to any of claims 3 to 5, **characterised in that** it comprises a step of confirming or modifying the selection carried out by the terminal, comprising the following steps:
- the terminal sends to a second server, whether or not confounded with the first server, a message indicating the customisation data set selected for said terminal; and
- said second server sends to the terminal a response that confirms to it the selection carried out by the terminal, or requesting that it replace the customisation data set selected for said terminal with another customisation data set.

7. Method according to claim 6, **characterised in that** the step of confirming or modifying the selection carried out by the terminal, further comprises the following steps:
- the terminal sends to said second server said carrier information;
- the second server selects said other customisation data set according to said carrier information; and
- the second server sends said other customisation data set to the terminal.

8. Method according to any of claims 1 and 2, **characterised in that** it comprises a step of sending by the terminal to a third server of said carrier information, and **in that** the third server carries out:
- said step of obtaining carrier information, by receiving said carrier information;
- said step of selecting a customisation data set; and
- a step of sending to the terminal of the customisation data set selected for said terminal.

9. Method according to any of claims 1 to 8, **characterised in that** said terminal comprises a SIM card, and **in that** said customisation data is stored in said SIM card and/or in said terminal.

10. Method according to any of claims 1 to 9, **characterised in that** said customisation data includes at least one of said following elements:
- an identity number IMSI;
- an authentication key Ki; and
- an authentication algorithm.

11. Method according to any of claims 1 to 10, **characterised in that** said step of obtaining carrier information consists in obtaining carrier measurements, for each of at least two radio communication networks.

12. Radio communication terminal comprising an operating mode requiring the association to said terminal of a customisation data set specific to a radio communication network, in order to allow for a link of said terminal with said radio communication network, **characterised in that** it comprises:
- means of obtaining carrier information, pertaining to carriers, each carrier being associated to a distinct geographical cell of a radio communication network;
- means of selecting a customisation data set from among a plurality of customisation data sets, according to at least one selection criterion applied to the carrier information obtained, said plurality of customisation data sets comprising at least one first customisation data set specific to a first radio communication network and at least one second customisation data set specific to a second radio communication network.

13. Server for the definitive customisation or customisation for a predetermined duration related to a subscription of a radio communication terminal comprising an operating mode requiring the association to said terminal of a customisation data set specific to a radio communication network, in order to allow for a link of said terminal with said radio communication network, **characterised in that** it comprises:
- means for obtaining carrier information, pertaining to carriers, each carrier being associated with a distinct geographical cell of a radio communication network;
- means of selecting a customisation data set from among a plurality of customisation data sets, according to at least one selection criterion applied to the carrier information obtained, said plurality of customisation data sets comprising at least one first customisation data set specific to a first radio communication network and at least one second customisation data set specific to a second radio communication network.

14. SIM card of a radio communication terminal comprising an operating mode requiring the association to said terminal of a customisation data set specific to a radio communication network, in order to allow for a link of said terminal with said radio communication network, **characterised in that** it comprises means of storing said customisation data.

15. Computer programme product that can be downloaded from a communication network and/or recorded on a support that can be read by computer and/or can be executed by a processor **characterised in that** it comprises programme code instructions for the execution of the steps of the method of customisation of at least one of the claims 1 to 11 when said programme is executed on a computer.

16. Means of storage, which may be totally or partially removable, that can be read by a computer, storing a set of instructions that can be executed by said computer in order to implement the method of customising according to any of claims 1 to 11.

## Patentansprüche

1. Verfahren zur definitiven Personalisierung oder zur Personalisierung für eine vorbestimmte an ein Abonnement eines Funkkommunikationsendgeräts gebundene Dauer, wobei das Funkkommunikationsendgerät eine Funktionsweise aufweist, die eine Verknüpfung eines für ein Funkkommunikationsnetzwerk spezifischen Personalisierungsdatensatzes mit dem Endgerät erfordert, um die Verbindung des Endgeräts mit dem Funkkommunikationsnetzwerk zuzulassen,
**dadurch gekennzeichnet, dass** es die folgenden Schritte aufweist, die ein einziges Mal während einer ersten Benutzung des Endgeräts ausgeführt werden:
- Platzieren des Endgeräts in einer realen Benutzungsumgebung, wobei kein aktiver und definitiver Personalisierungsdatensatz mit dem Endgerät verknüpft ist;
- Empfangen von Trägerinformationen, die sich auf vom Endgerät empfangene Träger beziehen, wobei jeder Träger einer anderen geographischen Zelle eines Funkkommunikationsnetzwerks zugeordnet ist;
- Auswählen eines Personalisierungsdatensatzes für das Endgerät unter einer Vielzahl von Personalisierungsdatensätzen in Abhängigkeit von mindestens einem auf die empfangenen Trägerinformationen angewendeten Auswahlkriterium, wobei die Vielzahl der Personalisierungsdatensätze mindestens einen für ein erstes Funkkommunikationsnetzwerk spezifischen ersten Personalisierungsdatensatz und mindestens einen für ein zweites Funkkommunikationsnetzwerk spezifischen zweiten Personalisierungsdatensatz aufweist.

2. Verfahren nach Anspruch 1, **dadurch gekennzeichnet, dass** das mindestens eine Auswahlkriterium einer Gruppe angehört, aufweisend:
- Auswahlkriterien, welche auf einer Qualität der von dem Endgerät empfangenen Träger basieren; und
- Auswahlkriterien, welche auf einer vom Funkkommunikationsnetzwerk vorbestimmten Präferenzreihenfolge basieren.

3. Verfahren nach einem der Ansprüche 1 und 2, **dadurch gekennzeichnet, dass** die Schritte zum Empfangen von Trägerinformationen und zum Auswählen eines Personalisierungsdatensatzes durch das Endgerät ausgeführt werden.

4. Verfahren nach Anspruch 3, **dadurch gekennzeichnet, dass** das Verfahren einen Schritt zum Freigeben des/der anderen als den/die ausgewählten Personalisierungsdatensatzes(-sätze) aufweist.

5. Verfahren nach Anspruch 4, **dadurch gekennzeichnet, dass** der Schritt zum Freigeben die folgenden Schritte aufweist:
- das Endgerät versendet an einen ersten Server eine Nachricht, die den für das Endgerät ausgewählten Personalisierungsdatensatz anzeigt; und
- der erste Server gibt den/die anderen als den/die ausgewählten Personalisierungsdatensatz(-sätze) frei.

6. Verfahren nach einem der Ansprüche 3 bis 5, **dadurch gekennzeichnet, dass** es einen Schritt zum Bestätigen oder zum Modifizieren der durch das Endgerät ausgeführten Auswahl aufweist, der die folgenden Schritte aufweist:
- das Endgerät versendet an einen zweiten Server, der mit dem ersten Server zusammenfällt oder nicht zusammenfällt, eine Nachricht, die den für das Endgerät ausgewählten Personalisierungsdatensatz anzeigt; und
- der zweite Server versendet an das Endgerät eine Antwort, die dem Endgerät die durch das Endgerät ausgeführte Auswahl bestätigt, oder die das Endgerät auffordert den für das Endgerät ausgewählten Personalisierungsdatensatz durch einen anderen Personalisierungsdatensatz zu ersetzen.

7. Verfahren nach Anspruch 6, **dadurch gekennzeichnet, dass** der Schritt zum Bestätigen oder zum Modifizieren der durch das Endgerät ausgeführten Auswahl, des Weiteren die folgenden Schritte aufweist:
- das Endgerät versendet an den zweiten Server die Trägerinformationen;
- der zweite Server wählt den anderen Personalisierungsdatensatz in Abhängigkeit von den Trägerinformationen aus; und
- der zweite Server versendet den anderen Personalisierungsdatensatz an das Endgerät.

8. Verfahren nach einem der Ansprüche 1 und 2, **dadurch gekennzeichnet, dass** es einen Schritt zum Versenden der Trägerinformationen durch das Endgerät an einen dritten Server aufweist, und dass der dritte Server ausführt:
- den Schritt zum Empfangen von Trägerinformationen durch Empfangen der Trägerinformationen;
- den Schritt zum Auswählen eines Personalisierungsdatensatzes; und
- einen Schritt zum Versenden des durch das Endgerät ausgewählten Personalisierungsdatensatzes an das Endgerät.

9. Verfahren nach einem der Ansprüche 1 bis 8, **dadurch gekennzeichnet, dass** das Endgerät eine SIM Karte aufweist, und dass die Personalisierungsdaten auf der SIM Karte und/oder auf dem Endgerät gespeichert sind.

10. Verfahren nach einem der Ansprüche 1 bis 9, **dadurch gekennzeichnet, dass** die Personalisierungsdaten mindestens einen der folgenden Elemente aufweisen:
- eine IMSI Identifizierungsnummer;
- einen Ki Authentifizierungsschlüssel; und
- einen Authentifizierungsalgorithmus.

11. Verfahren nach einem der Ansprüche 1 bis 10, **dadurch gekennzeichnet, dass** der Schritt zum Empfangen der Trägerinformationen aus Empfangen von Trägermessungen für jeden von mindestens zwei Funkkommunikationsnetzwerken besteht.

12. Funkkommunikationsendgerät aufweisend eine Funktionsweise, die die Verknüpfung eines für ein Funkkommunikationsnetzwerk spezifischen Personalisierungsdatensatzes mit dem Endgerät erfordert, um die Verbindung des Endgeräts mit dem Funkkommunikationsnetzwerk zuzulassen, **gekennzeichnet durch**:
- Mittel zum Empfangen von Trägerinformationen, die sich auf Träger beziehen, wobei jeder Träger einer anderen geographischen Zelle eines Funkkommunikationsnetzwerks zugeordnet ist;
- Mittel zum Auswählen eines Personalisierungsdatensatzes unter einer Vielzahl von Personalisierungsdatensätzen in Abhängigkeit von mindestens einem auf die empfangenen Trägerinformationen angewendeten Auswahlkriterium, wobei die Vielzahl der Personalisierungsdatensätze mindestens einen für ein erstes Funkkommunikationsnetzwerk spezifischen ersten Personalisierungsdatensatz und mindestens einen für ein zweites Funkkommunikationsnetzwerk spezifischen zweiten Personalisierungsdatensatz aufweist.

13. Server zur definitiven Personalisierung oder zur Personalisierung für eine vorbestimmte an ein Abonnement eines Funkkommunikationsendgeräts gebundene Dauer, wobei das Funkkommunikationsendgerät eine Funktionsweise aufweist, die eine Verknüpfung eines für ein Funkkommunikationsnetzwerk spezifischen Personalisierungsdatensatzes mit dem Endgerät erfordert, um die Verbindung des Endgeräts mit dem Funkkommunikationsnetzwerk zuzulassen, **gekennzeichnet durch**:
- Mittel zum Empfangen von Trägerinformationen, die sich auf Träger beziehen, wobei jeder Träger einer anderen geographischen Zelle eines Funkkommunikationsnetzwerks zugeordnet ist;
- Mittel zum Auswählen eines Personalisierungsdatensatzes unter einer Vielzahl von Personalisierungsdatensätzen in Abhängigkeit von mindestens einem auf die empfangenen Trägerinformationen angewendeten Auswahlkriterium, wobei die Vielzahl der Personalisierungsdatensätze mindestens einen für ein erstes Funkkommunikationsnetzwerk spezifischen ersten Personalisierungsdatensatz und mindestens einen für ein zweites Funkkommunikationsnetzwerk spezifischen zweiten Personalisierungsdatensatz aufweist.

14. SIM-Karte eines Funkkommunikationsendgeräts, das eine Funktionsweise aufweist, die die Verknüpfung eines für ein Funkkommunikationsnetzwerk spezifischen Personalisierungsdatensatzes mit dem Endgerät erfordert, um die Verbindung des Endgeräts mit dem Funkkommunikationsnetzwerk zuzulassen, **dadurch gekennzeichnet, dass** es Mittel zum Speichern der Personalisierungsdaten aufweist.

15. Computerprogrammerzeugnis, das von einem Kommunikationsnetzwerk herunterladbar ist und/oder auf einem von einem Computer lesbaren Träger gespeichert ist und/oder durch einen Prozessor ausführbar ist, **dadurch gekennzeichnet, dass** es Programmcodeanweisungen zum Ausführen der Schritte des Verfahrens zur Personalisierung nach mindestens einem der Ansprüche 1 bis 11 aufweist, während das Programm auf einem Computer ausgeführt wird.

16. Speichermittel, die unter Umständen vollständig oder teilweise abnehmbar sind, mittels eines Computers lesbar sind, und einen durch den Computer ausführbaren Anweisungssatz speichert, um das Verfahren zur Personalisierung nach einem der Ansprüche 1 bis 11 auszuführen.
